# EUROPÄISCHE PATENTSCHRIFT

(11) **EP 1 272 814 B1**
(45) Veröffentlichungstag und Bekanntmachung des Hinweises auf die Patenterteilung: **16.06.2004**
(21) Anmeldenummer: 01913521.9
(22) Anmeldetag: 19.01.2001
(51) Int. Cl.: G01C 21/34

(54) **VERFAHREN ZUR ROUTENPLANUNG IN EINEM NAVIGATIONSSYSTEM**
ROUTE PLANNING METHOD FOR USE IN A NAVIGATION SYSTEM
PROCEDE D'ETABLISSEMENT D'UN ITINERAIRE DANS UN SYSTEME DE NAVIGATION

(30) Priorität: 10.02.2000 DE 10005780
(43) Veröffentlichungstag der Anmeldung: 08.01.2003
(73) Patentinhaber: ROBERT BOSCH GMBH, 70442 Stuttgart (DE)
(72) Erfinder: PETZOLD, Bernd, 31515 Wunstorf (DE); HAHLWEG, Cornelius, 22043 Hamburg (DE); DRAEGER, Gerd, 38102 Braunschweig (DE); KERSKEN, Ulrich, 31199 Diekholzen (DE)
(86) Internationale Anmeldenummer: PCT/DE2001/000211
(87) Internationale Veröffentlichungsnummer: WO 2001/059408

(56) Entgegenhaltungen:
- EP-A- 0 967 460
- WO-A-92/08952
- WO-A-93/09511
- US-A- 5 905 451

## Beschreibung

### Technisches Gebiet

Die Erfindung betrifft ein Verfahren zur Routenplanung in einem Navigationssystem, bei welchem vom Nutzer Rahmenvorgaben bezüglich der zu planenden Route gemacht werden und die Route anhand von Optimierungskriterien festgelegt wird. Femer betrifft die Erfindung ein zur Durchführung des Verfahrens geeignetes Navigationssystem.

### Stand der Technik

Navigationssysteme zur Unterstützung eines Verkehrsteilnehmers, wie insbesondere eines Autofahrers, sind bekannt und bestehen im wesentlichen aus den Subsystemen (a) Digitale Straßenkarte, (b) Rechenmodul zur Fahrtroutenberechnung, (c) Positionsbestimmung, (d) Systemverwaltung, (e) Sensorik zur Erkennung von Fahrzeugbewegungen, (f) Eingabeeinheit und (e) Ausgabeeinheit für die Bedienung und Zielführung. Die Routenberechnung erfolgt in der Regel auf der Basis von verschiedenen Optimierungsparametern, die vom Nutzer vorab eingestellt werden müssen oder bereits herstellerseitig in den Algorithmen zur Routenberechnung fest verankert sind. Die Optimierung erfolgt mit Hilfe von in einer Datenbasis enthaltenen Bewertungen der beteiligten Streckenelemente, welche zum Beispiel Länge, mögliche Geschwindigkeit, Straßentyp und dergleichen umfassen können. Die Auswahl einer optimalen Route kann zum Beispiel in der Zusammenstellung der schnellsten oder der kürzesten Route bestehen. Welche Gewichtung hier vorgenommen wird, kann durch die persönlichen Nutzerpräferenzen beeinflusst werden.

Die herstellerseitig vorgegebene Optimierung ist in der Regel auf einen "Durchschnittsfahrer" parametrisiert und liefert daher auch nur für einen solchen eine optimale Route. Unterschiedliche Fahrer bewerten die Routenempfehlung jedoch in aller Regel verschieden. Es werden zum Beispiel bestimmte Straßentypen bevorzugt beziehungsweise gemieden, oder die Durchschnittsgeschwindigkeit auf Autobahnen variiert je nach Fahrzeugtyp, Fahrertemperament oder dergleichen. Eine Einbeziehung dieses individuellen Fahrerverhaltens oder von anderen Präferenzen bei der Routenwahl (zum Beispiel Bevorzugung landschaftlich schöner Strecken) erfolgt derzeit bestenfalls durch eine manuelle und in der Regel nur bei stehendem Fahrzeug mögliche Eingabe von vorgegebenen Parametern. Dies erschwert insbesondere mit steigender Parameterzahl die Übersichtlichkeit und Bedienbarkeit des Navigationssystems, so dass eine sinnvoll abgestimmte Modifikation aller relevanten Parameter nur von erfahrenen beziehungsweise technisch interessierten Nutzern erwartet werden kann.

WO-A-93 09 511 beschreibt ein Verfahren zur Routenplanung in einem Navigationssystem, bei dem in einem ersten Schritt mehrere Fahrtrouten aufgrund ortsunabhängiger situationsspezifischer Nutzerpräferenzen berechnet werden. In einem zweiten Schritt werden diese Routen anhand ortsabhängiger situationsspezifischer Nutzerpräferenzen mittels Fuzzylogik bewertet und dem Nutzer akustisch oder optisch samt Bewertung angezeigt.

### Darstellung der Erfindung, Aufgabe, Lösung, Vorteile

Aufgabe der vorliegenden Erfindung war es, ein Navigationssystem der eingangs genannten Art derart zu verbessern, dass die Routenplanung für den Nutzer nachvollziehbar wird und der Nutzer in einfacher Weise Einfluss auf die Routenplanung nehmen kann.

Diese Aufgabe wird durch ein Verfahren nach Anspruch 1 und ein Navigationssystem nach Anspruch 6 gelöst.

Das Verfahren zur Routenplanung in einem Navigationssystem, bei welchem vom Nutzer Rahmenvorgaben bezüglich der zu planenden Route (Startpunkt, Zielpunkt, Zeitvorgaben etc.) gemacht werden und die Route anhand von Optimierungskriterien (kürzester Weg, kürzeste Zeit etc.) festgelegt wird, ist demnach durch einen Ablauf in drei Schritten gekennzeichnet. In einem ersten Schritt wird eine Menge erster Fahrtrouten auf der Basis ortsunabhängiger und situationsspezifischer Nutzerpräferenzen ermittelt. Gegebenenfalls kann diese Menge auch nur eine einzige vorgeschlagene Fahrtroute enthalten. In einem zweiten Schritt werden die im ersten Schritt ermittelten Fahrtrouten auf der Basis ortsabhängiger und situationsspezifischer Nutzerpräferenzen in Teilabschnitten neu berechnet. In dieser Phase kann zum Beispiel entschieden werden, ob lokal eine Ortsdurchfahrt oder eine Ortsumgehung gewählt wird. Schließlich werden in einem dritten Schritt die ermittelten Fahrtrouten anhand mindestens eines Bewertungskriteriums priorisiert, so dass sie dem Nutzer in einer abgestuften Reihenfolge vorgeschlagen werden können.

Die erfindungsgemäße hierarchische Priorisierung beziehungsweise stufenweise Berücksichtigung von Optimierungskriterien in der Routenplanung führt zu einem Planungsprozess, dessen Ablauf auch für den technisch nicht versierten Nutzer nachvollziehbar bleibt. Der Nutzer kann daher Abweichungen des Planungsverhaltens von seinen Wunschvorstellungen leichter erkennen und gegebenenfalls korrigierend eingreifen.

Der Nutzer kann nach jedem der drei durchgeführten Teilschritte eine der darin ermittelten Fahrtrouten auswählen, wobei dem Benutzer vorzugsweise nach jedem der Schritte die ermittelten Fahrtrouten optisch und/oder akustisch mit ihrer jeweiligen Bewertung dargestellt werden. Der Benutzer kann somit den Ablauf der Routenplanung verfolgen und ohne weiteres nachvollziehen, da der Reihe nach verschiedene Kriterien zur Auswahl der Routen angewendet werden. Auf diese Weise bleibt das Optimierungsverfahren für den Benutzer transparent. Ferner ist eine individuelle Anpassung an den Nutzer möglich, da dieser jederzeit ein aus seiner Nutzersicht optimales Teilergebnis auswählen und für die Zielführung zugrunde legen kann.

Die Darstellung der ausgewählten Fahrtrouten nach den jeweiligen Schritten des Verfahrens kann in graphischer Form auf einer digitalen Karte erfolgen. Ebenso ist die akustische und optische Textdarstellung anhand markanter Merkmale möglich. Zum Beispiel kann die Beschreibung durch Aufzählung bekannter Orte entlang der Fahrtroute erfolgen.

Vorzugsweise wird das im ersten Schritt angewendete Optimierungskriterium zu Beginn des Planungsvorganges vom Nutzer selbst vorgegeben. Auf diese Weise kann ein aktuell gültiges primäres Optimierungskriterium wie zum Beispiel die Bevorzugung der landschaftlich schönsten Strecke berücksichtigt werden, so dass die durchgeführte Routenplanung der aktuellen Zielsetzung des Nutzers besser entspricht. Zudem unterstützt die Vorgabe des primären Optimierungskriteriums insgesamt die Nachvollziehbarkeit der durchgeführten Routenempfehlung. Das vom Nutzer vorgegebene Optimierungskriterium wird vorzugsweise anhand vorgegebener ortsunabhängiger und situationsspezifischer Nutzerpräferenzen parametrisiert. Das heißt, dass das Optimierungskriterium die Leitlinie bildet, anhand welcher die zu berücksichtigenden Nutzerpräferenzen ausgewählt werden. Die Parameter des Optimierungskriteriums können herstellerseitig, vom Nutzer und/oder von anderen Systemen außerhalb des Navigationssystems vorgegeben werden. Das vom Nutzer eingegebene Optimierungskriterium kann ferner dazu verwendet werden, die in den verschiedenen Schritten des Verfahrens gemachten Routenempfehlungen entsprechend zu priorisieren.

Die Parameter des ersten Schritts sind vorzugsweise routen-, streckenoder streckenabschnittsbezogen. Nach Anspruch 2 werden sie vorteilhafterweise aus mindestens einer Streckeneigenschaft und/oder den Umgebungseigenschaften von Strecken (zum Beispiel Naturschutzgebiete, Bebauung) und/oder zugeordneten Objekten (zum Beispiel touristische Sehenswürdigkeiten, Geschäfte bestimmter Branchen) abgeleitet.

Soweit die Parameter für die Durchführung des ersten Schritts des Verfahrens vorgegeben sind, können in einer Weiterbildung des Verfahrens automatisch nutzerspezifische und situationsbedingte Abweichungen ermittelt werden, die dann externen Vorrichtungen für die statistische Auswertung des Nutzerverhaltens zur Verfügung gestellt werden können. Das Verkehrswegenetz, welches der Routenberechnung zugrunde gelegt wird, kann anhand des typischen Nutzerverhaltens und/oder der Wegdistanz oder Reisezeitdistanz zwischen Start und Ziel begrenzt werden.

Die dem zweiten Schritt des Verfahrens zugrunde gelegten Nutzerpräferenzen für die Routenwahl können gemäß Anspruch 3 vom Nutzer selbst oder von einem System außerhalb vorgegeben werden. Die Auswahl der zu berücksichtigenden Nutzerpräferenzen kann dabei situationsspezifisch und unabhängig vom ersten Schritt erfolgen. Insbesondere kann sie unabhängig vom primären Optimierungskriterium sein, welches gegebenenfalls im ersten Schritt zugrunde gelegt worden ist. Auf diese Weise ist es zum Beispiel möglich, bei dem primären Optimierungskriterium "kürzeste Route" lokal eine weiträumige und damit längere Ortsumfahrung zu wählen, wenn der Nutzer zur Hauptverkehrszeit ungern durch größere Orte fährt.

Im dritten Schritt des erfindungsgemäßen Verfahrens werden die im ersten und zweiten Schritt ermittelten Fahrtrouten anhand mindestens eines Bewertungskriteriums priorisiert. Dabei kann zusätzlich die Anzahl der vorgeschlagenen Fahrtrouten durch eine vorgegebene Schranke für das jeweilige Bewertungskriterium begrenzt werden.

Das im dritten Schritt verwendete Bewertungskriterium beinhaltet nach Anspruch 4 vorzugsweise mindestens einen der Parameter Reisezeit oder Weglänge. Diese Kriterien sind von so großer Bedeutung, dass sie im allgemeinen bei keiner Routenplanung außer Acht gelassen werden sollten.

Das Bewertungskriterium kann ferner die Parameter "maximale Reisezeit" und/oder "maximale Reiseweglänge" beinhalten. Das heißt, dass Fahrtrouten, welche die Werte der genannten Parameter überschreiten, nicht angezeigt werden oder zumindest sehr negativ bewertet werden. Die Werte für die Parameter maximale Reisezeit und/oder maximale Reiseweglänge können vorzugsweise anhand von vorgegebenen oder von externen Vorrichtungen automatisch ermittelten situationsabhängigen Nutzerpräferenzen bestimmt werden. Insbesondere können diese Parameter aus dem Fahrtziel, dem Fahrtzweck und/oder der Fahrtroute abgeleitet werden.

Bei einer Weiterbildung des Verfahrens können die Optimierungskriterien und Bewertungskriterien, die in den Schritten des Verfahrens angewendet werden, über eine vorgegebene nutzerspezifische und situationsbezogene Verhaltensstatistik konfiguriert werden. Das heißt, dass das Verhalten des Fahrers bei der Interaktion mit der Routenplanung sowie sein anschließendes Fahrverhalten und die eventuellen Abweichungen von Routenempfehlungen beobachtet, aufgezeichnet und schließlich statistisch ausgewertet werden. Signifikante Muster im Verhalten des Nutzers können dann dazu verwendet werden, optimal auf den Nutzer zugeschnittene Bewertungskriterien auszuwählen oder vollständig neu zu erzeugen. Somit können der Bedienablauf und Abweichungen von der Routenbefolgung zum Beispiel externen Vorrichtungen zur Aufzeichnung und Adaptation von Nutzerpräferenzen zugeführt werden. Auf diese Weise kann das herstellerseitig für einen Durchschnittsfahrer parametrisierte Navigationssystem automatisch an die Bedürfnisse des Nutzers angepasst werden.

Das erfindungsgemäße Verfahren kann in Fahrzeugnavigationssystemen, portablen Navigationssystemen oder zentral basierten Navigationssystemen genutzt werden. Vorteilhaft an dem Verfahren ist, dass gegenüber dem festen Einprägen von Nutzerprofilen und Nutzerwünschen die hierfür erforderliche Komplexität der Einstellungen und Parametersätze nach außen nicht sichtbar ist und damit nicht störend oder gar hinderlich auf den Nutzer wirkt. Ferner können über Kommunikationsverbindungen zu Datenzentralen oder über mobile Datenträger Standardbewertungen für das Verkehrswegenetz vorgegeben werden (zum Beispiel landschaftlich, geschichtlich oder touristisch interessante Strecken), anhand derer eine Routenberechnung erfolgen und zudem bei mehrmaliger Nutzung an das individuelle Nutzerverhalten angepasst werden kann (zum Beispiel landschaftlich schöne Strecken aus Sicht des Benutzers). Durch die Bewertungen im zweiten und dritten Schritt des Verfahrens können beim

Nutzer momentan niederrangige Präferenzen berücksichtigt werden. So kann zum Beispiel eine landschaftlich schöne Strecke ausgewählt werden, die aber eine vorgegebene Reisezeit nicht überschreitet. Eingriffe des Nutzers in die Routenplanung, zum Beispiel die vorzeitige Auswahl einer Route eines Zwischenschrittes, können in vorteilhafter Weise für eine verbesserte Adaptation des Systems an das Nutzerverhalten verwendet werden. Ebenso kann das begriffliche Verständnis des im ersten Schritt auswählbaren Optimierungskriteriums an das vom Nutzer zugrunde gelegte Verständnis angeglichen werden, so dass eine hohe Nutzerakzeptanz erreicht werden kann.

### Kurze Beschreibung der Zeichnungen

Im folgenden wird die Erfindung mit Hilfe der Figuren beispielhaft erläutert. Es zeigen:
- Fig. 1: schematisch die Komponenten eines Navigationssystems;
- Fig. 2: schematisch ein erfindungsgemäß modifiziertes Gesamtsystem zur Navigation;
- Fig. 3: ein Flussdiagramm eines ersten Teils des Verfahrens zur Routenplanung;
- Fig. 4: ein Flussdiagramm des zweiten Teils des Verfahrens zur Routenplanung.

### Bester Weg zur Ausführung der Erfindung

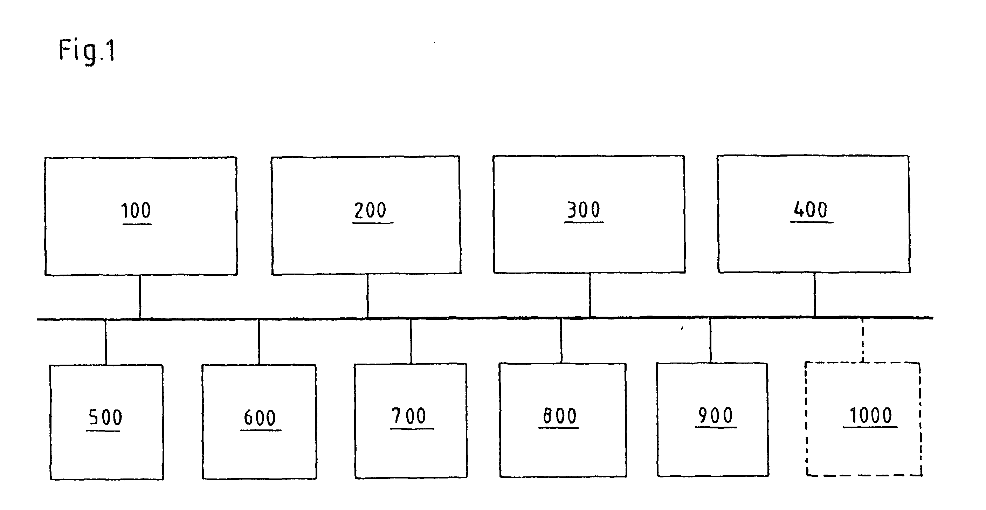

In Figur 1 sind die Komponenten eines Navigationssystems schematisch. dargestellt. Das Navigationssystem besteht aus den Subsystemen Digitale Straßenkarte 100, Rechenmodul zur Fahrtroutenbestimmung 400, Positionsbestimmung 300, Systemverwaltung 200, steuerbare Datenerfassungssensorik 500, Eingabeeinheit 600, Ausgabeeinheit 700 und Zielführung 900. Optional kann auch eine Einheit 1000 zur Kommunikation mit anderen Systemen außerhalb des Navigationssystems vorhanden sein.

Erfindungsgemäß soll dieses Navigationssystem um eine dynamisierbare Datenbasis 800 für Optimierungskriterien zur nutzeradaptiven Routenplanung ergänzt werden. In der Datenbasis 800 werden nutzerund situationsspezifische Konfigurationsparameter für die Routenberechnung und die Navigationsdatenbasis gespeichert. Optional kann die Datenbasis 800 so erweitert werden, dass eine automatische Aufbereitung von Vorgaben des Nutzers sowie die Auswahl der aktuell gültigen Parametereinstellungen erfolgen kann.

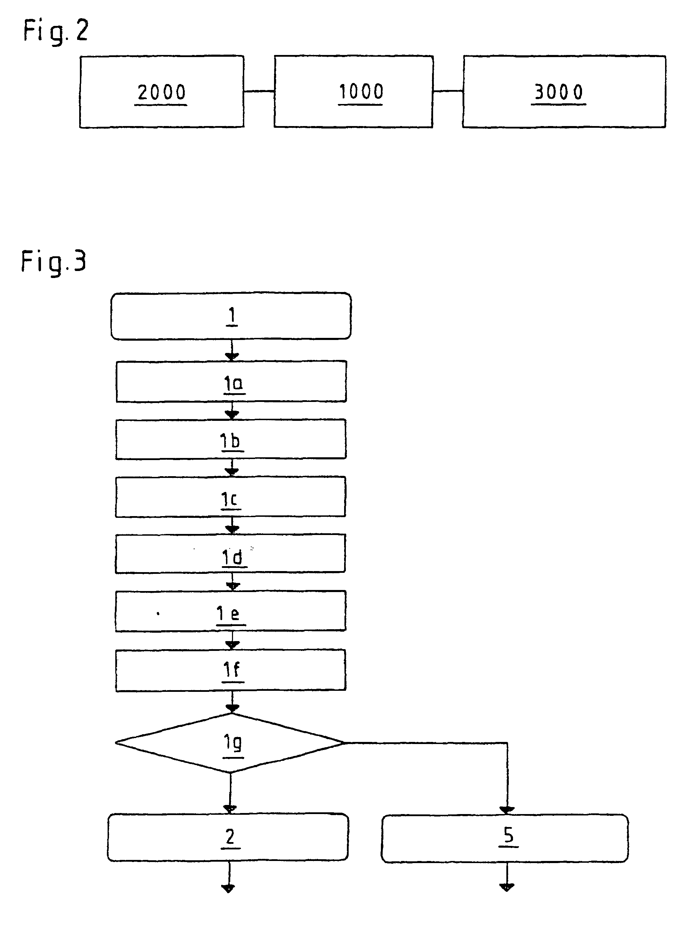

In Figur 2 ist ein Gesamtsystem dargestellt, bei dem zumindest Teile der Datenbasis 800 autark im mobilen Teilsystem 2000 bzw. im mobilen oder ortsfesten Teilsystem 3000 angeordnet sind, wobei die Systeme 2000 und 3000 über eine Kommunikationseinheit 1000 verbunden sind.

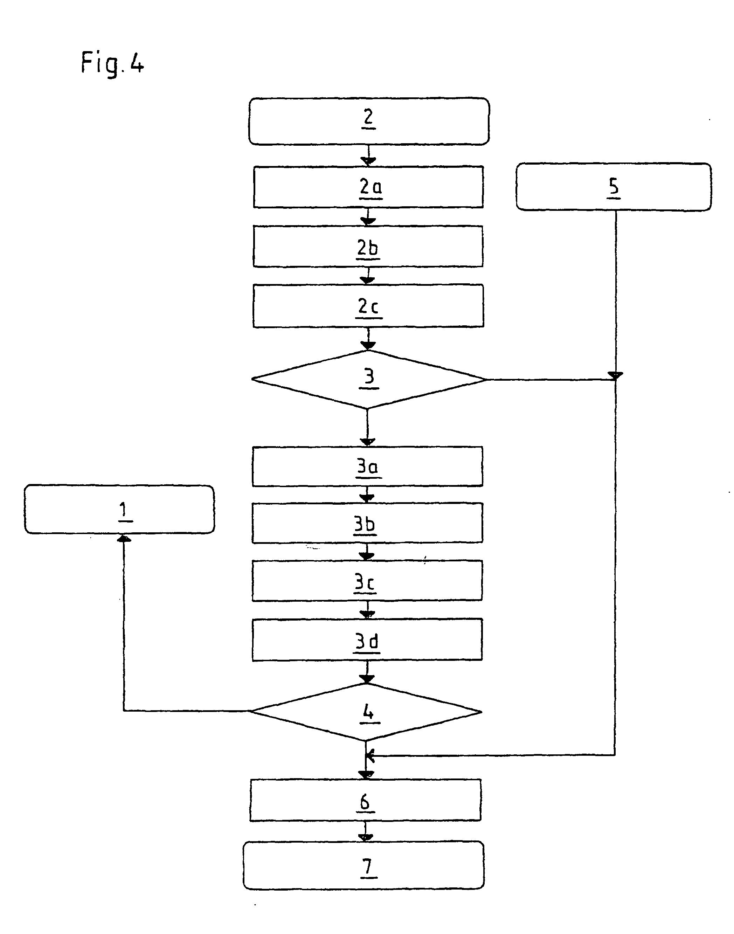

Das Verfahren zur nutzeradaptiven Routenplanung wird im folgenden mit Hilfe der Figuren 3 und 4 beschrieben.

Im Schritt 1 wird das Verfahren mit der Zieleingabe durch den Nutzer oder andere (auch systemexterne) Einheiten initialisiert.

In Schritt 1a erfolgt die Bestimmung eines nutzerspezifischen Berechnungsgebietes im Verkehrswegenetz, das mindestens die aktuelle Position und das Ziel enthält. Im Schritt 1b erfolgt die Auswahl des aktuell gültigen Optimierungskriteriums, zum Beispiel "landschaftlich schöne Route", "stauarme Route" oder dergleichen.

In Abhängigkeit vom im Schritt 1b ausgewählten Optimierungskriterium erfolgt im Schritt 1c die Auswahl der aktuell gültigen ortsunabhängigen Nutzerpräferenzen. Hierbei kann es sich um Regeln wie zum Beispiel "Meide Landstraßen in nebligen Gebieten" handeln. Mit diesen Kriterien erfolgt eine Neubewertung des Verkehrswegenetzes in dem Berechnungsgebiet aus Schritt 1a.

In Schritt 1d erfolgt die Berechnung aller möglichen Routen in dem Berechnungsgebiet aus Schritt 1a. Im nachfolgenden Schritt 1e wird die Priorisierung der berechneten Routen gemäß der bestmöglichen Erfüllung des Optimierungskriteriums vorgenommen.

Die Darstellung der N besten Routen auf der Ausgabeeinheit 700 erfolgt in Schritt 1f, wobei N eine vom Nutzer oder vom System vorgebbare Zahl sein kann. Der erste Schritt a) des erfindungsgemäßen Verfahrens ist damit beendet.

Der Nutzer kann im Schritt 1g bereits eine der vorgeschlagenen Routen auswählen. In diesem Falle würde das Verfahren zu Schritt 5 verzweigen, der zu Schritt 6 weiterleitet. Findet keine Auswahl statt, so wird das Verfahren mit Schritt 2 (Figur 4) fortgesetzt.

Im Schritt 2a erfolgt im Berechnungsgebiet aus Schritt 1a eine Auswahl der gebietsrelevanten ortsabhängigen Nutzerpräferenzen mit nachfolgender lokaler Neubewertung des Netzes. In Schritt 2b erfolgt dann eine lokale Neuberechnung der Fahrtrouten mit den jeweiligen, vom Optimierungskriterium im Schritt 1a unabhängigen Nutzerpräferenzen. Hierbei kann es sich zum Beispiel um Regeln wie "Meide Ortsdurchfahrten durch zeitkürzeste Umfahrung" handeln.

Die Darstellung der neu berechneten N besten Routen erfolgt im Schritt 2c. Hiermit ist der zweite Schritt b) des erfindungsgemäßen Verfahrens abgeschlossen.

Im Schritt 3 kann wiederum vom Nutzer eine der vorgeschlagenen Routen vorzeitig ausgewählt werden. Erfolgt eine solche Auswahl, so verzweigt das System zum Schritt 6. Andernfalls wird es im Schritt 3a fortgesetzt.

In Schritt 3a erfolgt die Auswahl eines gegebenenfalls durch den Nutzer wählbaren Bewertungskriteriums (zum Beispiel kürzeste Zeit oder kürzester Weg) und die Bewertung der N besten Routen nach diesem Bewertungskriterium. Im anschließenden Schritt 3b erfolgt die Berechnung unter Vorgabe einer nutzerspezifischen Schranke S für das vorgenannte Bewertungskriterium (zum Beispiel "S = Reisezeit < 2h").

Im Schritt 3c werden alle K Routen, die die vorgenannte Schranke S erfüllen, dargestellt. Zusätzlich erscheint eine Bewertung der Routen aus den Schritten 1 und 3 in Form einer Gegenüberstellung. Diese kann zum Beispiel folgendermaßen aussehen:
"Schönste Routen unter zwei Stunden:
1-beste = Route 1 mit Reisezeit = 1:50 h
2-beste = Route 5 mit Reisezeit = 1:20 h
   ...."

Wenn es keine K Routen gibt, die die Schranke S erfüllen, oder wenn der Nutzer alternativ alle berechneten Routen im Berechnungsgebiet sehen will, so erfolgt in Schritt 3d die Darstellung aller Routen.

Im Schritt 4 kann der Nutzer schließlich eine Route auswählen, woraufhin zum Schritt 6 verzweigt wird. Erfolgt keine Auswahl, so kann das gesamte Verfahren durch einen Rücksprung zum Schritt 1 neu gestartet oder es kann abgebrochen werden.

Im Schritt 6 wird die Zielführung gestartet, nach deren Abschluss das Verfahren im Schritt 7 beendet wird. Kommt es während der Zielführung im Schritt 6 zu einer signifikanten Änderung der Streckeneigenschaften (zum Beispiel durch Verkehrsstörungen), so erfolgt eine lokale Neuberechnung der Fahrtroute unter Berücksichtigung der hierfür gültigen Präferenzen.

## Patentansprüche

1. Verfahren zur Routenplanung in einem Navigationssystem, bei welchem vom Nutzer Rahmenvorgaben bezüglich der zu planenden Route gemacht werden und die Route anhand von Optimierungskriterien festgelegt wird,
wobei
a) in einem ersten Schritt (1, 1a - 1f) eine Menge erster Fahrtrouten auf der Basis ortsunabhängiger situationsspezifischer Nutzerpräferenzen ermittelt wird,
b) in einem zweiten Schritt (2, 2a - 2c) die ersten Fahrtrouten auf der Basis ortsabhängiger und situationsspezifischer Nutzerpräferenzen in Teilabschnitten neu berechnet werden,
c) in einem dritten Schritt (2, 2a - 3d) die ermittelten Fahrtrouten anhand mindestens eines Bewertungskriteriums priorisiert werden,
wobei der Nutzer nach jedem der Schritte a), b) und c) eine der ermittelten Fahrtrouten auswählen kann, und wobei dem Benutzer nach jedem der Schritte a), b) oder c) die ermittelten Fahrtrouten optisch und/oder akustisch mit ihrer jeweiligen Bewertung dargestellt werden.

2. Verfahren nach Anspruch 1 , wobei die Parameter der Nutzerpräferenzen im ersten Schritt a) aus mindestens einer Streckeneigenschaft und/oder Umgebungseigenschaft der Strecken abgeleitet sind.

3. Verfahren nach einem der Ansprüche 1 bis 3, wobei die Nutzerpräferenzen im ersten und zweiten Schritt a) und b) vom Nutzer oder von einem externen System vorgegeben werden können.

4. Verfahren nach einem der Ansprüche 1 bis 3, wobei das Bewertungskriterium im dritten Schritt c) mindestens einen der Parameter Reisezeit oder Weglänge beinhaltet.

5. Verfahren nach einem der Ansprüche 1 bis 4, wobei die Optimierungskriterien oder Bewertungskriterien in den Schritten a), b) und c) über eine nutzerspezifische und situationsbezogene Verhaltensstatistik konfiguriert werden.

6. Navigationssystem enthaltend einen Routenplaner (100, 400, 600, 800) und eine Ausgabeeinheit (700), **dadurch gekennzeichnet, dass** der Routenplaner so ausgestaltet ist, dass er ein Verfahren zur Routenplanung nach einem der Ansprüche 1 bis 5 ausführen kann.

## Claims

1. Method for route planning in a navigation system, in which the user makes general specifications for the route which is to be planned, and the route is stipulated using optimization criteria,
where
a) in a first step (1, 1a - 1f) a set of first journey routes is ascertained on the basis of location-independent situation-specific user preferences,
b) in a second step (2, 2a - 2c) the first journey routes are recalculated in subsections on the basis of location-dependent and situation-specific user preferences,
c) in a third step (2, 2a - 3d) the ascertained journey routes are prioritized using at least one assessment criterion;
where the user can select one of the ascertained journey routes after each of steps a), b) and c), and
where the ascertained journey routes are presented to the user visually and/or audibly with their respective assessment after each of steps a), b) and c).

2. Method according to Claim 1, where the parameters of the user preferences in the first step a) are derived from at least one road characteristic and/or environment characteristic of the roads.

3. Method according to either of Claims 1 and 2,
where the user preferences in the first and second steps a) and b) can be prescribed by the user or by an external system.

4. Method according to one of Claims 1 to 3, where the assessment criterion in the third step c) contains at least one of the parameters travelling time and distance.

5. Method according to one of Claims 1 to 4, where the optimization criteria or assessment criteria in steps a), b) and c) are configured using a user-specific and situation-related behavioural statistic.

6. Navigation system containing a route planner (100, 400, 600, 800) and an output unit (700), **characterized in that** the route planner is in a form such that it can carry out a method for route planning according to one of Claims 1 to 5.

## Revendications

1. Procédé de planification d'itinéraire dans un système de navigation, au cours duquel l'utilisateur donne des indications de base relatives à l'itinéraire à planifier et l'itinéraire est déterminé à l'aide de critères d'optimisation,
selon lequel
a) dans une première étape (1, 1a - 1f), on calcule un certain nombre de premiers itinéraires en fonction de préférences utilisateur spécifiques à la situation et indépendantes du lieu,
b) dans une deuxième étape (2, 2a - 2c), on calcule à nouveau, en sections, les premiers itinéraires, en fonction de préférences utilisateur spécifiques à la situation et dépendantes du lieu,
c) dans une troisième étape (2, 2a - 3d), on classe les itinéraires de trajet calculés par ordre de priorité à l'aide d'au moins un critère d'évaluation,
l'utilisateur pouvant choisir après chaque étape a), b) et c) l'un des itinéraires calculés, et en représentant de façon optique et/ou acoustique pour l'utilisateur
après chaque étape a), b) ou c), les itinéraires calculés avec leur évaluation respective.

2. Procédé selon la revendication 1,
selon lequel les paramètres des préférences utilisateur, dans la première étape a), sont issus d'au moins une propriété de la route et/ou de l'environnement routier.

3. Procédé selon l'une des revendications 1 ou 2,
selon lequel les préférences utilisateur, dans les première et deuxième étapes a) et b), peuvent être prédéterminées par l'utilisateur ou par un système externe.

4. Procédé selon l'une des revendications 1 à 3,
selon lequel le critère d'évaluation, dans la troisième étape c), contient au moins l'un des paramètres que sont le temps de trajet ou la longueur du trajet.

5. Procédé selon l'une des revendications 1 à 4, selon lequel les critères d'optimisation ou les critères d'évaluation, dans les étapes a), b) et c), sont configurés par le biais d'une statistique comportementale spécifique à l'utilisateur et en rapport avec la situation.

6. Système de navigation contenant un planificateur d'itinéraire (100, 400, 600, 800) et une unité de sortie (700),
**caractérisé en ce que**
le planificateur d'itinéraire est conçu de telle sorte qu'il peut mettre en oeuvre un procédé de planification d'itinéraire selon l'une des revendications 1 à 5.
